Europäisches Patentamt

European Patent Office

Office européen des brevets

(19)

(11) Numéro de publication: **0 315 925**
**A1**

(12) **DEMANDE DE BREVET EUROPEEN**

(21) Numéro de dépôt: 88118494.9

(22) Date de dépôt: 07.11.88

(51) Int. Cl.⁴: **H01B 3/30 , C08G 73/14 , C08G 18/34**

(30) Priorité: 10.11.87 FR 8715557

(43) Date de publication de la demande:
**17.05.89 Bulletin 89/20**

(84) Etats contractants désignés:
**AT BE CH DE ES FR GB IT LI LU NL SE**

(71) Demandeur: **ALSTHOM**
**38, avenue Kléber**
**F-75784 Paris Cédex 16(FR)**

(72) Inventeur: **Anton, Alain**
**Rue de Beauregard Chaponnay**
**F-69360 Saint Symphorien d'Ozon(FR)**
Inventeur: **Wagner, Richard**
**6 rue Henri Lebrun**
**F-69330 Meyzieu(FR)**

(74) Mandataire: **Weinmiller, Jürgen et al**
**Lennéstrasse 9 Postfach 24**
**D-8133 Feldafing(DE)**

(54) **Vernis à base de polyamide-imide modifié et son procédé de fabrication.**

(57) Vernis à base de polyamide-imide, notamment pour couche thermoadhérente sur fil émaillé de conducteur électrique, comprenant le produit de condensation d'un acide polycarboxylique aromatique, ou anhydride correspondant, avec un polyisocyanate aromatique. L'acide polycarboxylique aromatique, ou anhydride correspondant, est additionné d'un diacide aliphatique et/ou d'un diacide cycloaliphatique, et/ou d'ester et/ou d'éther aliphatique ou cycloaliphatique, et/ou d'un diacide aromatique de structure asymétrique, le polyisocyanate aromatique étant éventuellement additionné d'un diisocyanate aliphatique ou cycloaliphatique. Le diacide aliphatique, et/ou l'ester et/ou éther aliphatique, est en proportion molaire de 5 % à 60 % par rapport au polyacide carboxylique aromatique. La condensation a lieu en quelques minutes à plusieurs heures entre 40° et 250° C.

EP 0 315 925 A1

Vernis à base de polyamide-imide modifié et son procédé de fabrication,

La présente invention concerne un vernis à base de polyamide-imide pour revêtement thermoadhérent sur fil émaillé de conducteur électrique, comprenant le produit de condensation d'un acide polycarboxylique aromatique, ou anhydride correspondant, avec un polyisocyanate aromatique. Elle s'étend en outre à son procédé de fabrication.

La plupart des bobinages des machines électriques connus sont en fils émaillés imprégnés d'un vernis. L'émail du fil assure la tenue diélectrique des conducteurs, et le vernis d'imprégnation la tenue mécanique des bobinages, ainsi que leur résistance à un environnement agressif (solvants, huiles, fluides de refroidissement).

Compte tenu des contraintes apportées par l'opération d'imprégnation sur le cycle de fabrication des bobinages, on a déjà proposé de remplacer le vernis d'imprégnation par une couche externe ou surcouche de vernis thermoadhérent sur le fil émaillé. Un tel vernis thermoadhérent doit permettre une simplification importante de la fabrication, puisque la consolidation du circuit magnétique ne nécessite après le bobinage qu'un simple chauffage par effet Joule ou passage dans une étuve.

On a déjà proposé à cet effet des surcouches thermoadhérentes en polyamide aliphatique, en polyhydantoïne modifié ou en polyamide aromatique.

Le collage de la surcouche sur l'émail est assuré par le ramollissement de la couche thermoplastique dans un domaine de températures allant selon la polymère de 150° à 240° C, mais ce phénomène est réversible, de sorte que les températures de collage sont voisines des températures de ramollissement.

Les surcouches ci-dessus, si elles assurent une bonne résistance mécanique, ne présentent cependant pas une résistance satisfaisante aux produits chimiques, notamment aux fluides de refroidissement du groupe des hydrocarbures fluorés ou chlorofluorés tels que le monochlorodifluorométhane.

On a proposé pour améliorer la thermoadhérence d'une surcouche de polyamide-imide sur un émail sous-jacent d'additionner le polyamide- imide d'un polymère thermoplastique à plus bas point de ramollissement, tel qu'un polyamide, un polyhydantoïne, un polyamide aromatique. On perd toutefois alors sur les propriétés mécaniques et chimiques de l'isolation apportées par le polyamide-imide.

Il a été décrit dans le document DE-A-3612372 des vernis à base de polyamide-imide pour couche thermoadhérente sur fil émaillé de conducteur électrique, formés par le produit de condensation d'acides aliphatiques dicarboxyliques, comprenant de 4 à 36 atomes de carbone dans leur chaîne, remplacés en proportion molaire par 10 % à 60 % d'acides aromatiques tri- ou tétracarboxyliques à au moins deux groupes carboxyles voisins, leurs anhydrides ou leurs esters acides, avec des diisocyanates aromatiques ou des diamines. Le rapport molaire des diacides aliphatiques aux acides aromatiques tri- ou tétracarboxyliques dans le mélange de départ est donc compris entre 66,7 % et 900 %. De tels vernis présentent une teneur élevée en groupes amides, de sorte que leurs résistances à la chaleur, aux agents chimiques et aux fluides frigorifiques restent notablement inférieures à celles de résines polyimides.

La présente invention a pour but de procurer des vernis à base de polyamide-imides pour couche thermoadhérente sur fil émaillé de conducteur électrique, qui permettent d'obtenir des émaux de bonne thermoadhérence, mais possédant en même temps des résistances élevées à la chaleur, notamment des températures de thermoplasticité élevées, et des résistances aux agents chimiques et aux fluides frigorifiques élevées. Les vernis selon l'invention permettent le dépôt d'une surcouche thermoadhérente à une température d'environ 180° à 230° C sur un fil émaillé de bobinage, présentant une excellente adhérence sur l'émail sous-jacent, sans précaution spéciale de fabrication.

Selon une première variante, le diacide aliphatique, et/ou l'ester et/ou l'éther à base de diacide aliphatique, est en proportion molaire de 5 % à 60 %, et de préférence de 20 % à 40 %, par rapport au polyacide carboxylique aromatique, le polyisocyanate aromatique étant éventuellement additionné d'un diisocyanate aliphatique ou cycloaliphatique.

Ce vernis répond en outre de préférence à au moins l'une des caractéristiques suivantes :
- Le diacide aliphatique est un diacide contenant dans sa chaine 2 à 36 atomes de carbone, et de préférence 4 à 10 atomes de carbone.
- L'ester de diacide aliphatique est le produit de réaction d'un diacide sur un dialcool, en proportion de 2 moles de diacide pour un mole de dialcool.
- Le diisocyanate aliphatique est de formule générale
$$O = C = N - (CHR)n - N = C = O$$
dans laquelle n est un entier de 4 à 11, et de préférence égal à 6, et R est l'hydrogène ou le radical méthyle.

- Le diisocyanate aliphatique est choisi dans le groupe comprenant l'isophorone diisocyanate, le cyclohexyle diisocyanate et le dicyclohexyl méthane diisocyanate.

Selon une seconde variante, l'acide polycarboxylique aromatique, ou l'anhydride correspondant, est additionné d'un diacide cycloaliphatique, et/ou d'un ester et/ou éther à base de diacide cycloaliphatique, et/ou d'un diacide aromatique de structure asymétrique, le polyisocyanate aromatique étant éventuellement additionné d'un diisocyanate aliphatique ou cycloaliphatique.

Ce vernis répond en outre de préférence à au moins l'une des caractéristiques suivantes :
- Le diacide cycloaliphatique est choisi dans le groupe des diacides des séries du cyclopropane, du cyclobutane, du cyclopentane, du cyclohexane et du cycloheptane.
- L'ester de diacide cycloaliphatique est le produit de réaction d'un diacide sur un dialcool, en proportion de 2 moles de diacide pour un mole de dialcool.
- Le diacide aromatique de structure asymétrique est l'acide orthophtalique ou l'acide isophtalique.

Dans les vernis de l'une et de l'autre variante, l'acide polycarboxylique aromatique, et/ou l'anhydride correspondant, et le polyisocyanate aromatique, sont additionnés en outre de préférence d'un composé monofonctionnel limiteur de chaîne à fonction carboxyle ou alcool primaire.

Le produit de condensation peut avantageusement être additionné d'une résine époxyde, à équivalent époxyde de 150 à 4000, et de préférence de 500 à 1000. Les proportions les plus favorables de résine époxyde sont de 5 % à 50 % en poids, et plus particulièrement de 10 % à 30 % en poids, par rapport à la résine polyamide-imide sèche.

Le procédé de fabrication du vernis selon la première variante ci-dessus est caractérisé en ce que l'on fait réagir de quelques minutes à plusieurs heures, à des températures comprises entre 40° et 250° C, un acide polycarboxylique aromatique, ou un anhydride correspondant, additionné d'un diacide cycloaliphatique, et/ou d'un ester et/ou d'un éther à base de diacide cycloaliphatique, et/ou d'un diacide aromatique de structure asymétrique, avec un polyisocyanate aromatique, éventuellement additionné d'un diisocyanate aliphatique ou cycloaliphatique.

Le procédé de fabrication du vernis selon la seconde variante ci-dessus est caractérisé en ce que l'on fait réagir de quelques minutes à plusieurs heures, à des températures comprises entre 40° C et 250° C, un acide polycarboxylique aromatique, ou un anhydride correspondant, additionné d'un diacide aliphatique, et/ou d'un ester et/ou éther à base de diacide aliphatique, en proportion molaire de 5 à 60 %, et de préférence de 20 % à 40 %, par rapport au polyacide carboxylique aromatique, avec un polyisocyanate aromatique, éventuellement additionné d'un diisocyanate aliphatique ou cycloaliphatique.

Le polyisocyanate aromatique utilisé dans la fabrication du vernis polyamide-imide est de préférence le 4-4' diphényl méthane-diisocyanate. On peut le remplacer en totalité ou partiellement pour le 2,4 -toluène-diisocyanate, le méta-phénylène-diisocyanate, le 2,4 -diphénylméthane-diisocyanate, le 2,2' -diphénylméthane-diisocyanate, le 4,6 -xylène- diisocyanate ou le 1,5, naphtalène-diisocyanate.

La réaction peut être effectuée en présence ou en l'absence de solvant. Les solvants préférés sont le diméthylformamide, le diméthylacétamide, la N-méthyl-pyrrolidone et des composés alcoylés aromatiques.

Il est parfois avantageux d'effectuer la réaction en plusieurs étapes. On peut élever la température de façon continue ou observer des paliers à différentes températures.

La réaction s'accompagne d'un dégagement gazeux d'anhydride carbonique. Ce dégagement gazeux ainsi que l'augmentation de viscosité du mélange réactionnel permettent de suivre le degré d'avancement de la réaction. Dans certains cas, il est avantageux d'effectuer la réaction, tout au moins la fin de celle-ci, en atmosphère inerte.

Il est avantageux de faire réagir les acides polycarboxyliques ou les anhydrides correspondants, ainsi que les diacides et les polyisocyanates, en quantités voisines des proportions stoechiométriques. Il sera généralement bon d'utiliser un excès pouvant aller jusqu'à 15 % en moles de groupes isocyanates.

Les polycondensats obtenus sont mis en solution dans des solvants polaires ou des mélanges de solvants polaires et d'hydrocarbures aromatiques.

La teneur en matière sèche du vernis peut aller jusqu'à 50 % en poids, mais sera de préférence entre 25 % et 35 % en poids.

Les vernis ainsi obtenus peuvent notamment être utilisés pour former une surcouche thermoadhérente sur des conducteurs métalliques émaillés à l'aide des vernis d'isolation connus résistant à haute température, tels que les polyesters ou les polyesterimides, notamment les polyesterimides au trihydroxyéthylisocyanurate (THEIC), avec ou sans première surcouche en polyamide-imide. Le dépôt sur le conducteur de l'émail s'effectue dans un premier four à température relativement élevée, et celui de la surcouche thermoadhérente dans un second four à une température inférieure. On peut cependant avec certains vernis effectuer le dépôt de l'émail et celui de la surcouche thermoadhérente dans le même four.

Lorsque l'on utilise un certain excès molaire de groupes isocyanates par rapport aux groupes carboxyliques, les groupes isocyanates restants après la réaction sont masqués par des agents de blocage présents dans le milieu, tels que la N-méthylpyrrolidone ou l'acide formique. Lors du passage dans les fours d'émaillage, les groupes isocyanates libérés réagissent sur les hydrogènes libres présents dans la chaîne polymèrique et permettent leur pseudo-réticulation, qui donne au polymère un début de caractère thermodurcissable, mis en évidence lors de la mesure de sa thermoadhérence. On remarque en effet une différence d'environ 30° à 50° C entre la température de collage, de l'ordre de 200° C, et la température de décollement, de 230° à 250° C.

Il est décrit ci-après à titre d'exemples des modes opératoires de préparation de vernis polyamide-imides selon la technique antérieure connue et de vernis modifiés selon l'invention.

Exemple 1 : Echantillon témoin en polyamide-imide non modifié.

Dans un ballon de 2 litres, on introduit 831,83 g de NMP (N-Méthyl-2-Pyrrolidone) puis on agite.

On chauffe à 40° C et on ajoute 192 g d'anhydride trimellitique (TMA) et 252,50 g de Diphénylméthane 4,4'-diisocyanate (MDI).

On élève la température à 80° C en 2 heures.

La température est ensuite relevée progressivement à 100° C en 2 heures. Le début de la réaction s'accompagne d'un dégagement gazeux ($CO_2$).

La température est relevée à un niveau de 100° C à 140° C en 4 heures. Il se dégage un total environ 85 g d'anhydride carbonique (97 % de la quantité théorique).

Le produit de réaction obtenu est dilué avec 122,97 g de NMP et 238,70 g de xylène.

Le vernis obtenu a une teneur en matière sèche de 27 % mesurée (sur 1 g - $\frac{1}{2}$ h - 200° C) et une viscosité Baumé à 20° C de 2000 mpas.

Exemple 2 - Echantillon témoin en polyamide-imide non modifié.

Dans un ballon de 2 litres, on introduit 670,54 g de NMP, puis on agite.

On chauffe à 40° C et on ajoute 192 g de TMA, 4,56 g d'acide formique et 252,5 g de MDI.

On élève la température à 80° C en 2 heures.

La température est ensuite relevée progressivement à 100° C en 2 heures. Le début de la réaction s'accompagne d'un dégagement gazeux ($CO_2$).

La température est relevée à nouveau de 100° C à 140° C en 4 heures. Il se dégage environ 85 g d'anhydride carbonique, soit 97 % de la quantité théorique.

Le produit de réaction obtenu est dilué avec 3,44 g de NMP et 168,49 g de xylène.

Le vernis obtenu a une teneur en matière sèche de 35 % mesurée (sur 1g - $\frac{1}{2}$ h - 200° C) et une viscosité Baumé à 20° C de 2 200 mpas.

Exemple 3 : Echantillon en polyamide-imide modifié.

Même mode opératoire que pour l'exemple 1.
Ordre d'addition et quantités des constituants :
1 - 788,90 g de NMP
2 - 115,20 g de TMA
3 - 58,40 g d'acide adipique
4 - 252,50 g de MDI

| Dilution par : | 116,62 g de NMP |
| | 226,38 g de xylène |

Le vernis obtenu a une teneur en matière sèche de 27 % mesurée (sur 1 g - $\frac{1}{2}$ h - 200° C) et une viscosité Baumé à 20° C de 2 100 mpas.

4

Exemple 4.

Même mode opératoire que pour l'exemple 2.
Ordre d'addition et quantités des constituants :
1 - 636,57 g de NMP
2 - 115, 20 g de TMA
3 - 58,40 g d'acide adipique
4 - 4,56 g d'acide formique
5 - 252,50 g de MDI

| Dilution par : | 3,06 g de NMP |
| --- | --- |
| | 159,91 g de xylène |

Le vernis obtenus a une teneur en matière sèche de 35 % mesurée (sur 1 g - $\frac{1}{2}$ h - 200° C) et une viscosité Baumé à 20° C de 2 300 mpas.

Exemple 5

Même mode opératoire que pour l'exemple 1.
Ordre d'addition et quantités des constituants :
1 - 838,83 g de NMP
2 - 134,40 g de TMA
3 - 60,60 g d'acide sébacique
4 - 252,50 g de MDI

| Dilution par : | 124,00 g de NMP |
| --- | --- |
| | 240,71 g de xylène |

Le vernis obtenu a une teneur en matière sèche de 27 % mesurée (sur 1 g - $\frac{1}{2}$ h -200° C) et une viscosité Baumé à 20° C de 2 100 mpas.

Exemple 6

Même mode opératoire que pour l'exemple 4.
Ordre d'addition et quantités des constituants :
1 - 755,90 g de NMP
2 - 192,00 g de TMA
3 - 67,28 g de 1,6 Hexane - diisocyanate
4 - 152,68 g de MDI

| Dilution par : | 111,75 g de NMP |
| --- | --- |
| | 216,91 g de Xylène |

Le vernis obtenu à une teneur en matière sèche de 27 % mesurée (sur 1g - $\frac{1}{2}$ h - 200° C) et une viscosité Baumé à 20° C de 1 900 mpas.

Exemple 7

Même mode opératoire que pour l'exemple 1.

Ordre d'addition et quantités des constituants :
1 - 754,09 g de NMP
2 - 115,20 g de TMA
3 - 58,40 g d'acide adipique
4 - 34,84 g de toluène diisocyanate
5 - 202,74 g de MDI

| Dilution par : | 111,47 g de NMP |
|---|---|
| | 216,39 g de Xylène |

Le vernis obtenu a une teneur en matière sèche de 27 % mesurée (sur 1g - $\frac{1}{2}$ h - 200° C) et une viscosité Baumé à 20° C de 1 800 mpas.

Exemple 8

Même mode opératoire que pour l'exemple 1.
Ordre d'addition et quantités des constituants :
1 - 743,77 g de NMP
2 - 153,60 g de TMA
3 - 33,20 g d'acide isophtalique
4 - 67,28 g de 1,6 Hexane - diisocyanate
5 - 152,68 g de MDI

| Dilution par | 109,95 g de NMP |
|---|---|
| | 213,43 g de xylène |

Le vernis obtenu a une teneur en matière sèche de 27 % mesurée (1g - $\frac{1}{2}$ h - à 200° C) et une viscosité Baumé à 20° C de 1 900 mpas.

Exemple 9

Même mode opératoire que pour l'exemple 1.
Ordre d'addition et quantités des constituants :
1 - 788,90 g de NMP
2 - 115,20 g de TMA
3 - 58,40 g d'acide adipique
4 - 252,50 g de MDI

| Dilution par | 243,62 g de NMP |
|---|---|
| | 256,14 g de xylène |

Addition de 135,24 g d'une solution de la résine époxyde "Epikote 1001" (de la Société SHELL Chimie) à 50 % dans un solvant mixte NMP/xylène (80/20 en volume).
Le vernis obtenu a une teneur en matière sèche de 27 % mesurée (1g - $\frac{1}{2}$ h - 200° C) et une viscosité Baumé à 20° C de 1500 mpas.

Exemple 10

Même mode opératoire que pour l'exemple 1.

6

Ordre d'addition et quantités des constituants :

1 - 1028,94 g de NMP

2 - 187,55 g de TMA

3 - 64,43 g de polyester diacide (préparé par réaction de 2 moles d'acide adipique sur 1 mole d'hexanediol-1,6).

4 - 290,14 g de MDI

| Dilution par | 58,23 g de NMP |
| | 271,83 g de Xylène |

Le vernis obtenu a une teneur en matière sèche de 27 % mesurée (1g - $\frac{1}{2}$ h - 200° C) et une viscosité Baumé à 20° C de 2000 mpas.

Les proportions des réactifs dans les exemples 1 à 9 ci-dessus sont résumées dans le tableau I ci-après :

TABLEAU I

| | Polyamide-imide non modifié | | Polyamide-imide modifié selon l'invention | | | | | | |
| | Témoins | | | | | | | | |
| | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| TMA | 1 mole | 1 mole | 0,6 mole | 0,6 mole | 0,7 mole | 1 mole | 0,6 mole | 0,8 mole | 0,6 mole |
| Acide Isophtalique | - | - | - | - | - | - | - | 0,2 mole | - |
| - Adipique | - | - | 0,4 mole | 0,4 mole | - | - | 0,4 mole | - | 0,4 mole |
| - Sébacique | - | - | - | - | 0,3 mole | - | - | - | - |
| MDI | 1,01 mole | 1,01 mole | 1,01 mole | 1,01 mole | 1,01 mole | 0,61 mole | 0,81 mole | 0,61 mole | 1,01 mole |
| TDI | - | - | - | - | - | - | 0,20 mole | - | - |
| HDI | - | - | - | - | - | 0,40 mole | - | 0,40 mole | - |
| HCOOH | - | 0,099 mole | - | 0,099 mole | - | - | - | - | - |
| Résine Epoxyde | - | - | - | - | - | - | - | - | 20 % poids |

EP 0 315 925 A1

Les vernis obtenus selon les exemples ci-dessus sont déposés en surcouche sur un émail polyesterimide au THEIC de la demanderesse commercialisé sous la référence 198560035.

L'émaillage se fait en continu mais dans deux fours séparés. La vitesse de défilement du fil dans les deux fours est de 14 m/minute.

1er four : dépose de la souscouche 198560035. Machine verticale à 4 zones de chauffage (250° C, 370° C, 500° C, 390° C).
Nommbre de passages : 6
Progression des diamètres des filières (en mm) : 0,850-0,870-0,890-0,910-0,930-0,950.
Surépaisseur obtenue 0,065 mm.

2ème four : dépose de la surcouche thermoadhérente (objet de l'invention).
Machine verticale à 3 zones de chauffage, (240° C, 325° C, 290° C).
Nombre de passages : 2
Progression des diamètres des filières : 0,950 mm - 0,980 mm
Surépaisseur obtenue : 0,030 à 0,035 mm.

Les fils émaillés obtenus sont contrôlés selon les normes de la Commission Electrotechnique Internationale (norme de la CEI) : publication 317-10A de 1978 et publication 851-1 à 6 de 1985. Le contrôle de la thermoadhérence est effectué selon la norme allemande DIN 46 435.

Les dimensions et propriétés mécaniques et chimiques des conducteurs isolés obtenus ont relevées dans le tableau II ci-après. Leurs propriétés électriques, thermiques et de thermoadhérence sont indiquées dans le Tableau III ci-après :

EP 0 315 925 A1

**T A B L E A U  II**

| | Exemples Témoins | | Exemples | | | | | | | | |
|---|---|---|---|---|---|---|---|---|---|---|---|
| | 1 | 2 | 3 | 4 | 5 | 6 | 7 | 8 | 9 | 10 |
| **Détermination des dimensions** | | | | | | | | | | |
| Fil nu en mm | ← | | | | 0,800 mm. | | | | | → |
| Fil isolé – | 0,897 | 0,896 | 0,896 | 0,897 | 0,897 | 0,896 | 0,896 | 0,895 | 0,895 | 0,897 |
| Surépaisseur totale en mm | 0,097 | 0,096 | 0,096 | 0,097 | 0,097 | 0,096 | 0,096 | 0,095 | 0,095 | 0,097 |
| – souscouche – | 0,065 | 0,065 | 0,065 | 0,065 | 0,065 | 0,065 | 0,065 | 0,065 | 0,065 | 0,065 |
| – surcouche – | 0,032 | 0,031 | 0,031 | 0,032 | 0,032 | 0,031 | 0,031 | 0,030 | 0,030 | 0,032 |
| **Propriétés mécaniques** | | | | | | | | | | |
| Allongement | 31 % | 32 % | 32 % | 31 % | 32 % | 31 % | 31 % | 32 % | 31 % | 32 % |
| Souplesse adhérence | 20%x1d | 20%x1d | 20%x1d | 20%x1d | 20%x1d | 20%x1d | 20%x1d | 20%x1d | 20%x1d | 20%x1d |
| Traction brusque | bon | bon | bon | bon | bon | bon | bon | bon | bon | bon |
| Résistance à l'abrasion | 14,5N | 14N | 14,1N | 14N | 13,9N | 14N | 13,9N | 13,8N | 14,2N | 14N |
| **Propriétés chimiques** | | | | | | | | | | |
| Essai au solvant ⎰ Avant | 6H | 6H | 6H | 6H | 6H | 6H | 6H | 6H | 6H | 6H |
| Essai au solvant ⎱ Après | 6H | 5H | 5H | 6H | 6H | 5H | 6H | 5H | 6H | 6H |
| Extraction au réfrigérant monochlorodifluorométhane (R 22) | 0,08% | 0,08% | 0,09% | 0,08% | 0,08% | 0,09% | 0,08% | 0,09% | 0,08% | 0,08% |
| Essai de cloquage | ← | | | pas de cloque ni de changement de couleur de l'émail | | | | | | → |

1 d = 1 diamètre

TABLEAU III

| | Exemples Témoins | | Exemples | | | | | | | |
|---|---|---|---|---|---|---|---|---|---|---|
| | 1 | 2 | 3 | 4 | 5 | 6 | 7 | 8 | 9 | 10 |
| Propriétés électriques | | | | | | | | | | |
| Tension de claquage | 14000 V | 13500 V | 13800 V | 13600 V | 13900 V | 13700 V | 14000 V | 13800V | 13700 V | 13900 V |
| Propriétés thermiques | | | | | | | | | | |
| Choc thermique (1h à 200° C) | 20 % x 1 diamètre | | | | | | | | | |
| Thermoplasticité | 450° C | 450° C | 440° C | 440° C | 445° C | 450° C | 440° C | 445° C | 430° C | 450° C |
| Propriétés de thermoadhérence | | | | | | | | | | |
| Selon la norme DIN 46 435 | | | | | | | | | | |
| - Force d'arrachement<br>- Température de ramollissement | <280 g | <280 g | 510 g<br>215° C | 490 g<br>210° C | 500 g<br>215° C | 480 g<br>205° C | 500 g<br>210° C | 490 g<br>205° C | 450 g<br>220°. C | 520 g<br>215° C |

On observe que les propriétés mécaniques, chimiques, électriques et thermiques, des fils isolés des exemples 3 à 10 selon l'invention sont aussi bonnes que celles des fils selon la technique connue des exemples 1 et 2, mais que leurs propriétés de thermoadhérence sont notablement supérieures.

**Revendications**

1/ Vernis à base de polyamide-imide pour couche thermoadhérente sur fil émaillé de conducteur électrique, comprenant le produit de condensation d'un acide polycarboxylique aromatique, ou anhydride correspondant, additionné d'un diacide aliphatique, et/ou d'un ester et/ou éther aliphatique, avec un polyisocyanate aromatique, caractérisé en ce que le diacide aliphatique, et/ou l'ester et/ou l'éther à base de diacide aliphatique, est en proportion molaire de 5 % à 60 %, et de préférence de 20 % à 40 %, par rapport au polyacide carboxylique aromatique, le polyisocyanate aromatique étant éventuellement additionné d'un diisocyanate aliphatique ou cycloaliphatique.

2/ Vernis selon la revendication 1, caractérisé en ce que le diacide aliphatique est un diacide contenant dans sa chaine 2 à 36 atomes de carbone, et de préférence 4 à 10 atomes de carbone.

3/ Vernis selon la revendication 1, caractérisé en ce que l'ester de diacide aliphatique est le produit de réaction d'un diacide sur un dialcool, en proportion de 2 moles de diacide pour un mode de dialcool.

4/ Vernis selon l'une des revendications 1 à 3, caractérisé en ce que le diisocyanate aliphatique est de formule générale

$$O = C = N - (CHR)n - N = C = O$$

dans laquelle n est un entier de 4 à 11, et de préférence égal à 6, et R est l'hydrogène ou le radical méthyle.

5/ Vernis selon l'une des revendications 1 à 4, caractérisé en ce que le diisocyanate aliphatique est choisi dans le groupe comprenant l'isophorone diisocyanate, le cyclohexyle diisocyanate et le dicyclohexyl méthane diisocyanate.

6/ Vernis à base de polyamide-imide pour couche thermoadhérente sur fil émaillé de conducteur électrique, comprenant le produit de condensation d'un acide polycarboxylique aromatique, ou anhydride correspondant, avec un diisocyanate aromatique, caractérisé en ce que l'acide polycarboxylique aromatique, ou l'anhydride correspondant, est additionné d'un diacide cycloaliphatique, et/ou d'un ester et/ou éther à base de diacide cycloaliphatique, et/ou d'un diacide aromatique de structure asymétrique, le polyisocyanate aromatique étant éventuellement additionné d'un diisocyanate aliphatique ou cycloaliphatique.

7/ Vernis selon la revendication 6, caractérisé en ce que le diacide cycloaliphatique est choisi dans le groupe des diacides des séries du cyclopropane, de cyclobutane, du cyclopentane, du cyclohexane et du cycloheptane.

8/ Vernis selon les revendication 7, caractérisé en ce que l'ester de diacide cycloaliphatique est le produit de réaction d'un diacide sur un dialcool, en proportion de 2 moles de diacide pour un mole de dialcool.

9/ Vernis selon la revendication 6, caractérisé en ce que le diacide aromatique de structure asymétrique est l'acide orthophtalique ou l'acide isophtalique.

10/ Vernis selon l'une des revendications 1 à 7, caractérisé en ce que l'acide polycarboxylique aromatique, et/ou l'anhydride correspondant, et le polyisocyanate aromatique sont additionnés en outre d'un composé monofonctionnel limiteur de chaîne à fonction carboxyle ou alcool primaire.

11/ Vernis selon l'une des revendications 1 à 10, caractérisé en ce que le produit de condensation est additionné d'une résine époxyde, à équivalent époxyde de 150 à 4000, et de préférence de 500 à 1000.

12/ Vernis selon la revendications 11, caractérisé en ce que la résine époxyde est additionnée en proportions de 5 % à 50 % en poids, et de préférence de 10 % à 30 % en poids, par rapport à le résine polyamide-imide sèche.

13/ Procédé de fabrication d'un vernis à base de polyamide-imide pour couche thermoadhérente sur fil émaillé de conducteur électrique, caractérisé en ce que l'on fait réagir de quelques minutes à plusieurs heures, à des températures comprises entre 40° et 250° C, un acide polycarboxylique aromatique, ou un anhydride correspondant, additionné d'un diacide cycloaliphatique, et/ou d'un ester et/ou d'un éther à base de diacide cycloaliphatique, et/ou d'un diacide aromatique de structure asymétrique, avec un polyisocyanate aromatique, éventuel lement additionné d'un diisocyanate aliphatique ou cycloaliphatique.

14/ Procédé de fabrication d'un vernis à base de polyamide-imide pour couche thermoadhérente sur fil émaillé de conducteur électrique, caractérisé en ce que l'on fait réagir de quelques minutes à plusieurs heures, à des températures comprises entre 40° C et 250° C, un acide polycarboxylique aromatique, ou un anhydride correspondant, additionné d'un diacide aliphatique, et/ou d'un ester et/ou éther à base de diacide aliphatique, en proportion molaire de 5 à 40 %, et de préférence de 20 % à 40 %, par rapport au polyacide carboxylique aromatique, avec un polyisocyanate aromatique, éventuellement additionné d'un diisocyanate aliphatique ou cycloaliphatique.

Office européen
des brevets

**RAPPORT DE RECHERCHE EUROPEENNE**

Numero de la demande

EP 88 11 8494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 108 982 (SCHENECTADY-MIDLAND) <br> * Revendications * <br> --- | 1-9 | H 01 B 3/30 <br> C 08 G 73/14 <br> C 08 G 18/34 |
| X | EP-A-0 226 968 (DR. BECK & CO.) <br> * Revendications * <br> --- | 1-9 | |
| X | US-A-4 408 032 (G.H. SOLLNER et al.) <br> * Revendications * <br> --- | 1-9 | |
| X | FR-A-2 512 826 (HITACHI) <br> * Revendications * <br> --- | 1-9 | |
| X | US-A-3 884 880 (D.R. DISQUE et al.) <br> * Revendications; résumé * <br> --- | 1-9 | |
| A | GB-A-2 016 487 (ASAHI) <br> ----- | | |

|  |  |
|---|---|
| | DOMAINES TECHNIQUES RECHERCHES (Int. Cl.4) |
| | H 01 B <br> C 08 G |

Le présent rapport a été établi pour toutes les revendications

| Lieu de la recherche | Date d'achèvement de la recherche | Examinateur |
|---|---|---|
| LA HAYE | 14-12-1988 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    & : membre de la même famille, document correspondant

EPO FORM 1503 03.82 (P0402)